(19) **Europäisches Patentamt**

**European Patent Office**

**Office européen des brevets**

(11) **EP 0 847 115 B1**

(12) **FASCICULE DE BREVET EUROPEEN**

(45) Date de publication et mention
de la délivrance du brevet:
**12.03.2003 Bulletin 2003/11**

(51) Int Cl.⁷: **H01S 3/06**

(21) Numéro de dépôt: **97402896.1**

(22) Date de dépôt: **02.12.1997**

(54) **Dispositif amplificateur de lumière à deux faisceaux incidents**

Lichtverstärkervorrichtung mit zwei einfallenden Bündeln

Light amplifier with two incident beams

(84) Etats contractants désignés:
**DE GB IT**

(30) Priorité: **04.12.1996 FR 9614853**

(43) Date de publication de la demande:
**10.06.1998 Bulletin 1998/24**

(73) Titulaire: **Thales**
**75008 Paris (FR)**

(72) Inventeurs:
• **Brassart, Gilles**
**94117 Arcueil Cedex (FR)**
• **Fayette, Thierry**
**94117 Arcueil Cedex (FR)**
• **Mottay, Eric**
**94117 Arcueil Cedex (FR)**
• **Treton, Jean-Pierre**
**94117 Arcueil Cedex (FR)**

(56) Documents cités:
EP-A- 0 377 206          WO-A-94/24734
US-A- 3 307 113

• **PATENT ABSTRACTS OF JAPAN vol. 10, no. 197
(E-418) [2253] , 10 juillet 1986 & JP 61 040073 A
(TOSHIBA), 26 février 1986,**

## Description

Le domaine de l'invention est celui des dispositifs amplificateurs et notamment celui des lasers de puissance.

Actuellement les dispositifs d'amplification comprennent généralement un milieu amplificateur, un système de pompage optique et un dispositif de refroidissement.

Le système de pompage est assuré par des diodes lasers de puissance présentant une meilleure efficacité que le pompage optique par lampes à éclairs. Les diodes laser qui se présentent sous forme de barrettes d'émetteurs unitaires alignés ont aujourd'hui des luminances élevées. En ce qui concerne les diodes qui émettent en régime impulsionnel, l'empilement de barrettes permet des architectures de structures amplificatrices dont les taux d'intégration sont élevées.

Pour stocker une forte énergie lumineuse par unité de volume dans les milieux amplificateurs et diminuer les effets induits par la charge thermique, on préfère aux barreaux cylindriques traditionnels, des plaques parallélépipédiques dont les dimensions dépendent des performances lumineuses recherchées.

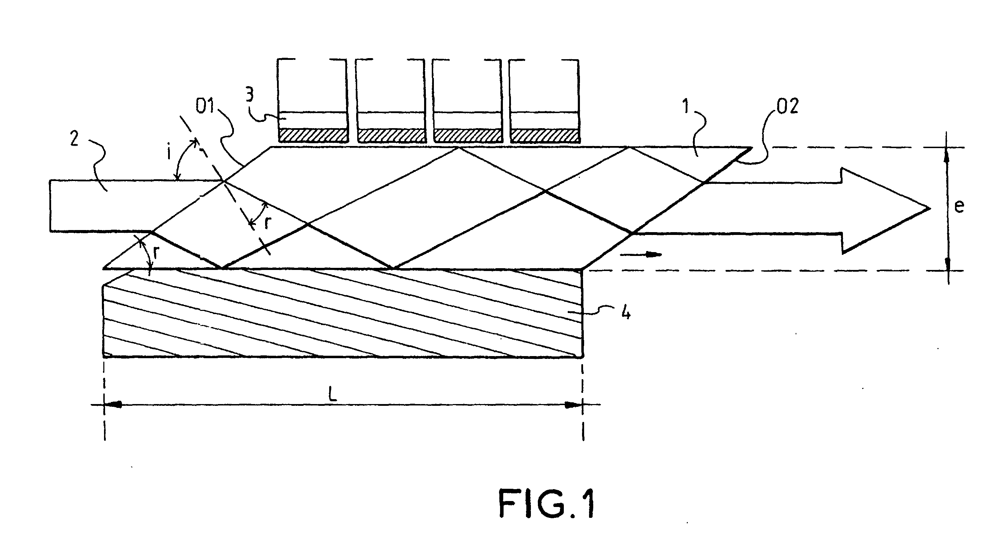

Selon l'art connu, des dispositifs amplificateurs de lumière comportant une plaque de milieu amplificateur, fonctionnent avec un ou deux faisceaux incidents, des moyens de pompage du milieu amplificateur, la plaque de milieu amplificateur possédant deux faces latérales parallèles entre elles. La figure 1 illustre une configuration de l'art antérieur comportant un faisceau de lumière 2, un milieu amplificateur 1, des moyens de pompage optique 3 et des moyens de refroidissement 4. Les faces 01 et 02 sont taillées parallèlement et polies de façon à ce que l'entrée et la sortie du faisceau lumineux 2 dans la plaque se fasse sous incidence de Brewster. La valeur de la tangente de l'angle d'incidence i est égale à l'indice de réfraction n du milieu à la longueur d'onde de la lumière. L'angle a incidence i est relié à l'angle de réfraction r par la formule suivante : $i + r = \pi/2$

La longueur L de la plaque est définie en fonction de son épaisseur e et du nombre pair 2.N de rebonds que fait le faisceau en réflexion totale à l'intérieur du milieu :

$$L = 2.N.e.cotg\ (i-r)$$

Les moyens de pompage 3, typiquement des diodes, sont couramment placés sur l'une des faces latérales principales de la plaque, alors que le dispositif de refroidissement 4 est placé sur l'autre face latérale principale.

Dans une telle configuration, en raison des faces parallèles 01 et 02, l'image d'un objet à travers la plaque est vue dans le même sens que l'objet. Pour de nombreuses applications, ceci constitue un inconvénient, c'est pourquoi l'invention propose de remédier à ce problème en proposant un dispositif amplificateur à hautes performances et délivrant une inversion d'image.

Il est connu du document Patent Abstracts of Japan vol. 10, n° 197 (E-418) [2253], un dispositif amplificateur de lumière comprenant :

-   une plaque de milieu amplificateur constituée d'une partie supérieure comportant deux faces latérales, et d'une partie inférieure comportant deux faces latérales, deux desdites faces latérales étant situées sur une première face du milieu amplificateur, et les deux autres desdites faces latérales étant situées sur une seconde face du milieu amplificateur opposée à ladite première face,
-   au moins un premier et un second faisceaux de lumière amplifiés par le milieu amplificateur (le premier faisceau étant introduit dans le milieu au niveau d'une première face latérale et le deuxième faisceau étant introduit dans le milieu au niveau d'une seconde face latérale), et
-   des moyens de pompage optique dudit milieu amplificateur (voir l'abrégé et les figures 1-3),
-   les deux faces latérales de ladite partie supérieure de la plaque de milieu amplificateur étant antiparallèles entre elles, et
-   les deux faces latérales de ladite partie inférieure de la plaque de milieu amplificateur étant antiparallèles entre elles.

L'invention propose un dispositif amplificateur à deux faisceaux, chacun des faisceaux entrant par une face du milieu amplificateur pour en ressortir au niveau d'une autre face antiparallèle à la première.

Plus précisément l'invention a pour objet un dispositif amplificateur de lumière comprenant une plaque de milieu amplificateur constituée d'une partie supérieure comportant deux faces latérales et d'une partie inférieure comportant deux faces latérales, deux des faces latérales étant situées sur une première face du milieu amplificateur, et les deux autres des faces latérales étant situées sur une seconde face du milieu amplificateur opposée à ladite première face, au moins un premier et un second faisceaux de lumière amplifiés par le milieu amplificateur, et des moyens de pompage optique dudit milieu amplificateur, les deux faces latérales de ladite partie supérieure de la plaque de milieu amplificateur étant antiparallèles entre elles, et les deux faces latérales de ladite partie inférieure de la plaque de milieu amplificateur étant antiparallèles entre elles, caractérisé en ce que :

-   le premier faisceau de lumière est introduit dans le milieu amplificateur au niveau d'une première face latérale, et émerge du milieu amplificateur au niveau d'une seconde face latérale antiparallèle à ladite première face latérale ;
-   le second faisceau de lumière est introduit dans le milieu amplificateur au niveau d'une troisième face latérale, et émerge du milieu amplificateur au niveau d'une quatrième face latérale antiparallèle à ladite troisième face latérale ;

- lesdites première et quatrième faces latérales étant situées sur ladite première face du milieu amplificateur, et

- lesdites seconde et troisième faces latérales étant situées sur ladite seconde face du milieu amplificateur.

Selon une première variante de l'invention, les faces 11 et 13 sont parallèles entre elles, les faces 12 et 14 étant également parallèles entre elles. Avantageusement, les faces latérales 11, 12, 13, 14 peuvent être taillées à l'angle de Brewster, les faisceaux de lumière 2 et 2' étant dans le milieu amplificateur, en réflexion totale sur les faces latérales principales 15 et 16 du milieu amplificateur.

Selon une seconde variante de l'invention, les faces 11 et 13 sont antiparallèles entre elles, les faces 12 et 14 étant également antiparallèles entre elles. Avantageusement, les faces latérales 11, 12, 13 et 14 peuvent être taillées à incidence nulle par rapport aux faisceaux de lumière 2 et 2', les faisceaux 2 et 2' étant en réflexion maximum sur les faces latérales principales 15 et 16 du milieu amplificateur.

L'invention a aussi pour objet un dispositif amplificateur à quatre passages de faisceau de lumière dans le milieu amplificateur. Plus précisément, ce dispositif amplificateur est caractérisé en ce qu'il comprend des moyens pour créer à partir d'un premier faisceau de lumière incident, quatre faisceaux de lumière traversant le milieu amplificateur, des moyens de changement de polarisation dudit premier faisceau de lumière, et des moyens de sélection et d'extraction d'une des polarisations des faisceaux de lumière générés dans le dispositif amplificateur.

L'invention sera mieux comprise et d'autres avantages apparaîtront à la lecture de la description qui va suivre, donnée à titre non limitatif et grâce aux figures annexées parmi lesquelles :

- la figure 1 illustre un dispositif amplificateur selon l'art connu ;

- la figure 2 illustre un premier exemple de dispositif amplificateur selon l'invention, dans lequel les faces 11 et 13 sont parallèles entre elles, les faces 12 et 14 étant également parallèles entre elles ;

- la figure 3 illustre un second exemple de dispositif amplificateur selon l'invention, dans lequel les faces 11 et 13 sont antiparallèles entre elles, les faces 12 et 14 étant également antiparallèles entre elles ;

- la figure 4a illustre une vue de face d'un troisième exemple de dispositif amplificateur selon l'invention comportant des moyens de pompage en regard des faces latérales 17 et 18 et des moyens de refroidissement en regard des faces 15 et 16 ;

- la figure 4b illustre une vue de dessus d'un troisième exemple de dispositif amplificateur selon l'invention comportant des moyens de pompage en regard des faces latérales 17 et 18 et des moyens de refroidissement en regard des faces 15 et 16 ;

- la figure 5 illustre un exemple de cavité laser dans laquelle est intégré un dispositif amplificateur selon l'invention.

De manière générale, le dispositif amplificateur selon l'invention comprend une plaque de milieu amplificateur, des moyens de pompage et des moyens de refroidissement, deux faisceaux de lumière à amplifier étant introduits dans le milieu amplificateur au niveau de deux faces latérales opposées dudit milieu. La longueur L de la plaque de milieu amplificateur est définie en fonction de son épaisseur e et du nombre impair (2N+1) de rebonds que font les deux faisceaux de lumière, à l'intérieur du milieu.

$$L = (2N+1)\ e.\ \text{cotg}\ (i\text{-}r)$$

L'image d'un objet à travers la plaque est ainsi inversée par rapport à un objet.

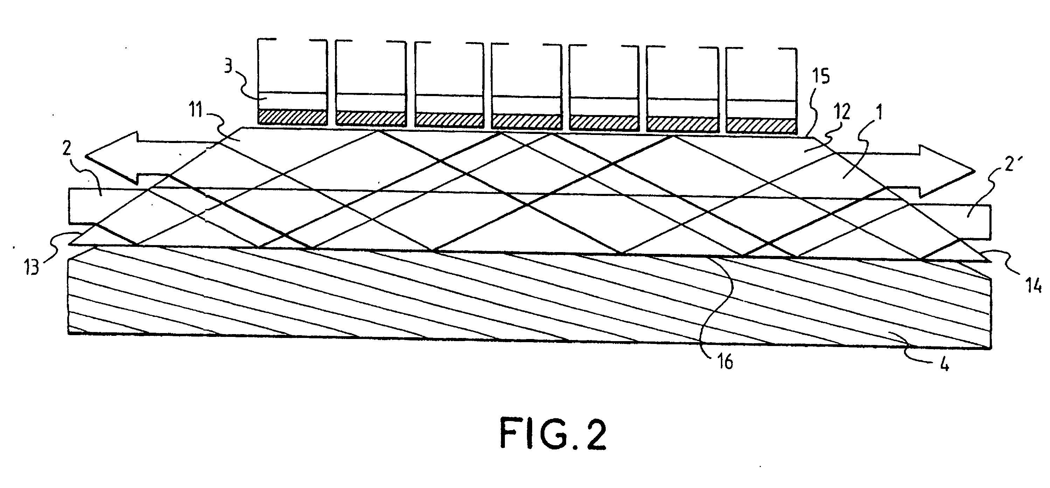

Selon une première variante de l'invention, illustrée en figure 2, la plaque de milieu amplificateur comprend dans sa partie supérieure deux faces 11 et 12 antiparallèles taillées à l'angle de Brewster, et dans sa partie inférieure deux faces 13 et 14 également antiparallèles et taillées à l'angle de Brewster. Selon cette première variante de l'invention, les faces 11 et 13 étant situées dans un même plan, les faces 12 et 14 étant également situées dans un même plan. Un premier faisceau de lumière 2 est introduit dans le milieu amplificateur au niveau de la face 13, un second faisceau de lumière étant introduit dans le milieu amplificateur au niveau de la face 14. Des moyens de pompage type diodes laser sont situées en regard d'une face latérale principale 15 du milieu amplificateur, des moyens de refroidissement étant situés en regard d'une face latérale principale 16 du milieu amplificateur opposé à la face 15.

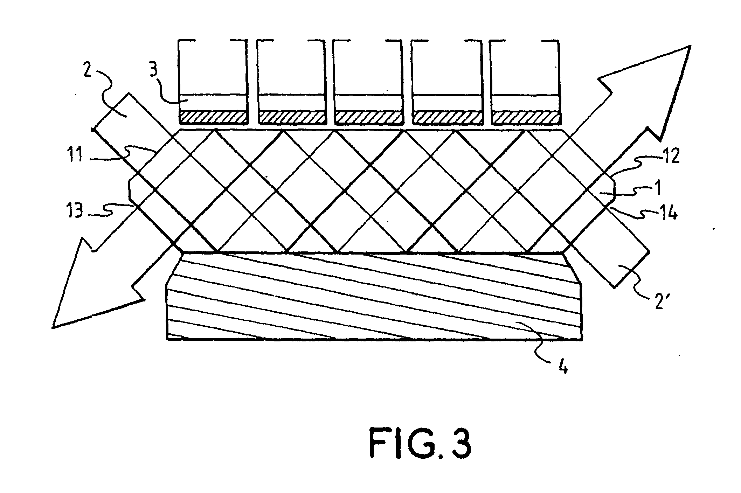

Selon une seconde variante de l'invention illustrée en figure 3, les faces 11 et 13 sont antiparallèles entre elles, les faces 12 et 14 étant également antiparallèles entre elles. Un premier faisceau de lumière 2 est introduit au niveau de la face 11, sous une incidence nulle, un second faisceau de lumière 2' étant introduit au niveau de la face 14 également sous incidence nulle. Pour assurer une réflexion maximale des faisceaux de lumière 2 et 2' sur les faces principales 15 et 16, à l'intérieur du milieu amplificateur, ces faces 15 et 16 reçoivent des traitements diélectriques adaptés pour favoriser cette réflexion maximale.

Il est à noter que les faisceaux 2 et 2' peuvent également être introduits sous toute incidence comprise entre l'incidence nulle et l'incidence de Brewster.

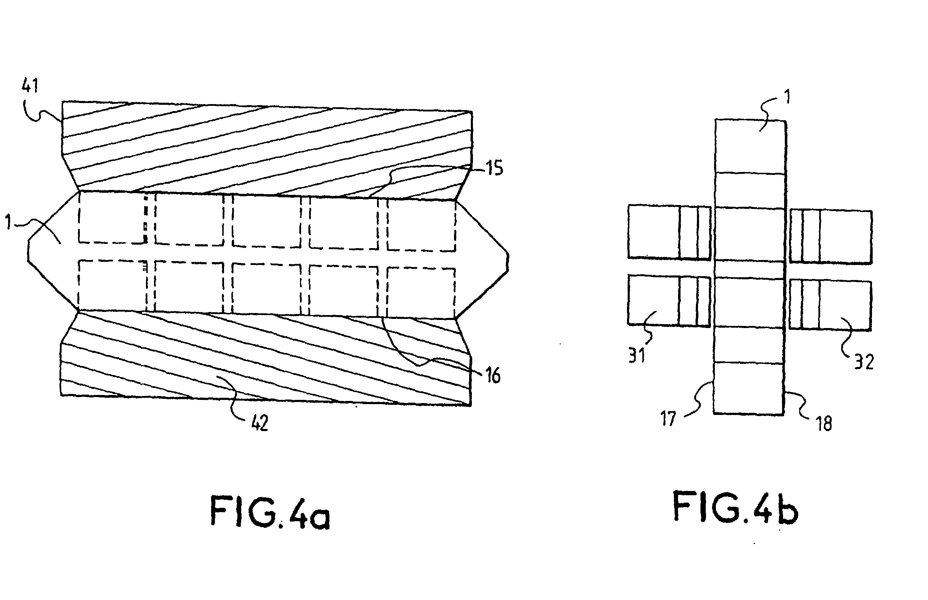

Selon un troisième exemple de dispositif amplificateur, les moyens de refroidissement illustrés en figures 4a et 4b peuvent être doublés, moyens 41 et 42, et situés de part et d'autre de la plaque de milieu amplificateur, en regard des faces latérales principales 15 et 16. Les moyens de pompage peuvent avantageusement être doublés, moyens 31 et 32, et situés au niveau des faces latérales principales 17 et 18 comme illustré en figure 4b.

Une telle configuration permet d'assurer un refroidissement plus efficace, couplé à une opération de pompage optique importante nécessitant des moyens de refroidissement puissants.

A titre d'exemple et selon le nombre de diodes empilées utilisé dans le dispositif d'amplification, le coefficient d'amplification d'une impulsion de quelques dizaines de nanosecondes, est compris entre 50 et 100, si le milieu amplificateur est par exemple du verre de phosphate dopé néodyme.

Il est à noter que toute sorte de milieux amplificateurs peut être utilisée dans le dispositif de l'invention. Les plaques de milieu amplificateur peuvent typiquement présenter une longueur d'une dizaine de centimètres, pour une épaisseur de l'ordre d'une dizaine de microns, l'étendue des différents faisceaux de lumière étant de l'ordre de 2 à 3 microns.

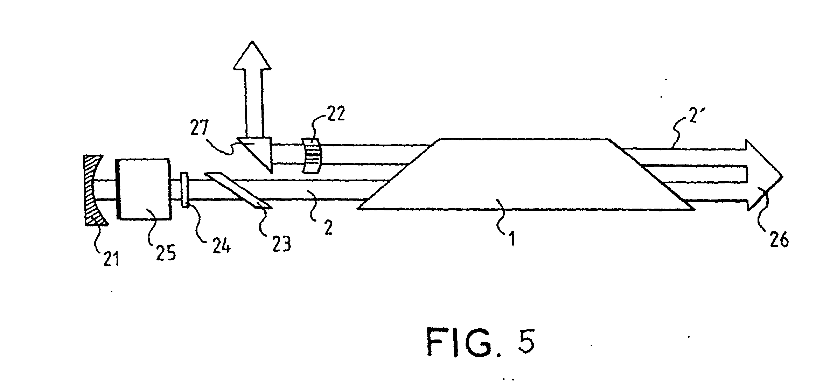

Le dispositif d'amplification selon l'invention peut avantageusement être utilisé dans des résonateurs élaborés pour la génération d'impulsions puissantes. La figure 5 illustre un exemple de résonateur utilisant une configuration de dispositif amplificateur de l'invention. Le résonateur est défini par l'ensemble des deux miroirs 21 et 22. Ce miroir 21 étant de réflexion maximale pour les faisceaux optiques 2 et 2'. Le miroir 22 étant de réflectivité variable pour lesdits faisceaux. Les deux miroirs ont des rayons de courbure dont la valeur dépend de la longueur de cavité et du comportement thermique du milieu amplificateur placé dans le dispositif amplificateur. Le résonateur est déclenché par un interrupteur optique de type cellule de Pockels constitué d'un polariseur 23, d'une lame quart d'onde 24 et d'une cellule de Pockels à champ longitudinal 25. Une équerre optique 26 permet le repli de la cavité résonante et génère le faisceau de lumière 2' au niveau de la plaque de milieu amplificateur. Un prisme 27 constitue l'optique de sortie de la cavité.

En utilisant par exemple une plaque de milieu amplificateur de type Nd : YAG et selon le nombre de diodes utilisées pour le pompage optique, le résonateur résultant de la cavité décrite ci-dessus est en mesure de délivrer une énergie propagée par des impulsions lumineuses, variant de quelques millijoules à quelques centaines de millijoules pour des durées d'impulsions comprises entre quelques nanosecondes et quelques dizaines de nanosecondes.

**Revendications**

1. Dispositif amplificateur de lumière comprenant une plaque de milieu amplificateur (1) constituée d'une partie supérieure comportant deux faces latérales (11, (12) et d'une partie inférieure comportant deux faces latérales (13, 14), deux des faces latérales (11, 13) étant situées sur une première face du milieu amplificateur, et les deux autres des faces latérales (12, 14) étant situées sur une seconde face du milieu amplificateur opposée à ladite première face, au moins un premier et un second faisceaux de lumière (2, 2') amplifiés par le milieu amplificateur, et des moyens de pompage optique (3) dudit milieu amplificateur, les deux faces latérales de ladite partie supérieure de la plaque de milieu amplificateur étant antiparallèles entre elles, et les deux faces latérales de ladite partie inférieure de la plaque de milieu amplificateur étant antiparallèles entre elles, **caractérisé en ce que** :

   - le premier faisceau de lumière (2) est introduit dans le milieu amplificateur au niveau d'une première face latérale (13, 11), et émerge du milieu amplificateur au niveau d'une seconde face latérale (12) antiparallèle à ladite première face latérale ;
   - le second faisceau de lumière (2') est introduit dans le milieu amplificateur au niveau d'une troisième face latérale (14), et émerge du milieu amplificateur au niveau d'une quatrième face latérale (11, 13) antiparallèle à ladite troisième face latérale ;
   - lesdites première et quatrième faces latérales étant situées sur ladite première face du milieu amplificateur, et
   - lesdites seconde et troisième faces latérales étant situées sur ladite seconde face du milieu amplificateur.

2. Dispositif amplificateur de lumière selon la revendication 1, **caractérisé en ce que** les première et quatrième faces sont parallèles entre elles et les deuxième et troisième faces sont parallèles entre elles.

3. Dispositif amplificateur de lumière selon la revendication 1, **caractérisé en ce que** les première et troisième faces sont parallèles entre. elles, et les deuxième et quatrième faces sont parallèles entre elles.

4. Dispositif amplificateur de lumière selon la revendication 2, **caractérisé en ce que** les faces latérales (11), (12), (13), (14) sont taillées à l'angle de Brewster, les premier et second faisceaux de lumière (2,2') étant dans le milieu amplificateur en réflexion totale sur les faces latérales principales (15, 16).

**5.** Dispositif amplificateur de lumière selon la revendication 3, **caractérisé en ce que** les faces latérales (11,12,13,14) sont taillées à incidence nulle par rapport aux premier et second faisceaux de lumière (2,2'), lesdits faisceaux étant en réflexion maximum sur les faces latérales principales (15, 16).

**6.** Dispositif amplificateur de lumière selon l'une des revendications 1 à 5, **caractérisé en ce qu'**il comprend des moyens de pompage (3) situés en regard d'une première face latérale principale (15,16) de la plaque de milieu amplificateur et des moyens de refroidissement (4) situés en regard de l'autre face latérale principale (16, 15) qui est opposée à ladite première face latérale principale.

**7.** Dispositif amplificateur selon l'une des revendications 1 à 5, **caractérisé en ce qu'**il comprend des moyens de pompage (31, 32) situés en regard au moins d'une face latérale principale (17, 18) et des moyens de refroidissement (41, 42) situés en regard au moins d'une autre face latérale principale (15, 16).

**8.** Résonateur optique comprenant des miroirs de renvoi (21, 22, 26) et un dispositif amplificateur selon l'une des revendications 1 à 7.

**9.** Résonateur optique selon la revendication 8, **caractérisé en ce qu'**il comprend une cellule de Pockels à champ longitudinal (25), une lame quart d'onde (24), et un polariseur (23) pour déclencher de manière impulsionnelle le résonateur optique.

## Claims

**1.** Light-amplifying device comprising a plate of amplifying medium (1) consisting of an upper part having two lateral faces (11, 12) and of a lower part having two lateral faces (13, 14), two of the lateral faces (11, 13) being located on a first face of the amplifying medium and the other two lateral faces (12, 14) being located on a second face of the amplifying medium on the opposite side from the said first face, at least first and second light beams (2, 2') which are amplified by the amplifying medium, and optical pumping means (3) for the said amplifying medium, the two lateral faces of the said upper part of the plate of amplifying medium being antiparallel to each other and the two lateral faces of the said lower part of the plate of amplifying medium being antiparallel to each other, **characterized in that**:

- the first light beam (2) is introduced into the amplifying medium at a first lateral face (13, 11) and emerges from the amplifying medium at a second lateral face (12) antiparallel to the said first lateral face;

- the second light beam (2') is introduced into the amplifying medium at a third lateral face (14) and emerges from the amplifying medium at a fourth lateral face (11, 13) antiparallel to the said third lateral face;

- the said first and fourth lateral faces being located on the said first face of the amplifying medium; and

- the said second and third lateral faces being located on the said second face of the amplifying medium.

**2.** Light-amplifying device according to Claim 1, **characterized in that** the first and fourth faces are parallel to each other and the second and third faces are parallel to each other.

**3.** Light-amplifying device according to Claim 1, **characterized in that** the first and third faces are parallel to each other and the second and fourth faces are parallel to each other.

**4.** Light-amplifying device according to Claim 2, **characterized in that** the lateral faces (11, 12, 13, 14) are cut at the Brewster angle, the first and second light beams (2, 2') undergoing, in the amplifying medium, total reflection on the main lateral faces (15, 16).

**5.** Light-amplifying device according to Claim 3, **characterized in that** the lateral faces (11, 12, 13, 14) are cut at zero incidence with respect to the first and second light beams (2, 2'), the said beams undergoing maximum reflection on the main lateral faces (15, 16).

**6.** Light-amplifying device according to one of Claims 1 to 5, **characterized in that** it includes pumping means (3) facing a first main lateral face (15, 16) of the plate of amplifying medium and cooling means (4) facing the other main lateral face (16, 15) which is on the opposite side from the said first main lateral face.

**7.** Amplifying device according to Claims 1 to 5, **characterized in that** it includes pumping means (31, 32) facing at least one main lateral face (17, 18) and cooling means (41, 42) facing at least one other main lateral face (15, 16).

**8.** Optical resonator comprising deflection mirrors (21, 22, 26) and an amplifying device according to one of Claims 1 to 7.

**9.** Optical resonator according to Claim 8, **characterized in that** it includes a longitudinal-field Pockels cell (25), a quarterwave plate (24) and a polarizer (23) for activating the optical resonator in a pulsed manner.

## Patentansprüche

1. Lichtverstärkervorrichtung mit einer Platte aus Verstärkungsmilieu (1) bestehend aus einem oberen Bereich mit zwei Seitenflächen (11, 12) und einem unteren Bereich mit zwei Seitenflächen (13, 14), wobei zwei der Seitenflächen (11, 13) an einer ersten Seite des Verstärkungsmilieus und die beiden anderen Seitenflächen (12, 14) an der zweiten Seite des Verstärkungsmilieus entgegengesetzt zur ersten Seite liegen, mit mindestens einem ersten und einem zweiten Lichtstrahl (2, 2'), die im Verstärkungsmilieu verstärkt werden, und mit optischen Pumpmitteln (3) für das Verstärkungsmilieu, wobei die beiden Seitenflächen des oberen Bereichs der Platte aus Verstärkungsmilieu zueinander antiparallel sind und auch die beiden Seitenflächen des unteren Bereichs der Platte aus Verstärkungsmilieu zueinander antiparallel sind, **dadurch gekennzeichnet, daß**

   - der erste Lichtstrahl (2) in das Verstärkungsmilieu durch eine erste Seitenfläche (13, 11) eintritt und aus dem Verstärkungsmilieu durch eine zweite Seitenfläche (12) austritt, die zur ersten Seitenfläche antiparallel ist,
   - der zweite Lichtstrahl (2') in das Verstärkungsmilieu durch eine dritte Seitenfläche (14) eintritt und aus dem Verstärkungsmilieu durch eine vierte Seitenfläche (11, 13) austritt, die zur dritten Seitenfläche antiparallel ist,
   - die erste und die vierte Seitenfläche an der ersten Seite des Verstärkungsmilieus liegen,
   - und die zweite und die dritte Seitenfläche an der zweiten Seite des Verstärkungsmilieus liegen.

2. Lichtverstärkervorrichtung nach Anspruch 1, **dadurch gekennzeichnet, daß** die erste Seitenfläche und die vierte Seitenfläche zueinander parallel verlaufen und auch die zweite und die dritte Seitenfläche zueinander parallel verlaufen.

3. Lichtverstärkervorrichtung nach Anspruch 1, **dadurch gekennzeichnet, daß** die erste Seitenfläche und die dritte Seitenfläche zueinander parallel verlaufen und auch die zweite und die vierte Seitenfläche zueinander parallel verlaufen.

4. Lichtverstärkervorrichtung nach Anspruch 2, **dadurch gekennzeichnet, daß** die Seitenflächen (11, 12, 13 und 14) gemäß dem Brewster-Winkel geschnitten sind, wobei der erste und der zweite Lichtstrahl (2, 2') im Verstärkungsmilieu an den beiden Hauptseitenflächen (15, 16) vollkommen reflektiert werden.

5. Lichtverstärkervorrichtung nach Anspruch 3, **dadurch gekennzeichnet, daß** die Seitenflächen (11, 12, 13 und 14) gemäß dem Einfallswinkel null bezüglich des ersten und zweiten Lichtstrahls (2, 2') geschnitten sind, wobei diese beiden Strahlen an den beiden Hauptseitenflächen (15, 16) optimal reflektiert werden.

6. Lichtverstärkervorrichtung nach einem der Ansprüche 1 bis 5, **dadurch gekennzeichnet, daß** sie Pumpmittel (3), die vor einer ersten Hauptseitenfläche (15, 16) der Platte aus Verstärkungsmilieu liegen, und Kühlmittel (4) aufweist, die vor der der ersten Hauptseitenfläche gegenüberliegenden anderen Hauptseitenfläche (16, 15) liegen.

7. Lichtverstärkervorrichtung nach einem der Ansprüche 1 bis 5, **dadurch gekennzeichnet, daß** sie Pumpmittel (31, 32), die vor mindestens einer ersten Hauptseitenfläche (17, 18) liegen, und Kühlmittel (41, 42) aufweist, die vor mindestens einer anderen Hauptseitenfläche (15, 16) liegen.

8. Optischer Resonator mit Reflexionsspiegeln (21, 22, 26) und einer Verstärkervorrichtung nach einem der Ansprüche 1 bis 7.

9. Optischer Resonator nach Anspruch 8, **dadurch gekennzeichnet, daß** er eine Pockelszelle (25) mit longitudinalem Feld, eine Viertelwellenlänge Lamelle (24) und einen Polarisator (23) besitzt, um den optischen Resonator impulsmäßig zu betreiben.

FIG.1

EP 0 847 115 B1

FIG.2

EP 0 847 115 B1

FIG.3

EP 0 847 115 B1

FIG.4b

FIG.4a

FIG. 5